# FASCICULE DE BREVET EUROPEEN

(11) **EP 3 309 624 B1**
(45) Date de publication et mention de la délivrance du brevet: **04.09.2019**
(21) Numéro de dépôt: 16193656.2
(22) Date de dépôt: 13.10.2016
(51) Int. Cl.: G04B 1/14, G04B 15/14, G04B 17/32, G04B 17/06

(54) **PROCÉDÉ D'ASSEMBLAGE DE COMPOSANTS HORLOGERS**
MONTAGEVERFAHREN FÜR UHRENKOMPONENTEN
METHOD FOR ASSEMBLING TIMEPIECE COMPONENTS

(43) Date de publication de la demande: 18.04.2018
(73) Titulaire: Patek Philippe SA Genève, 1204 Genève (CH)
(72) Inventeur: MAIER, Frédéric, 2000 Neuchâtel (CH); JEANNERET, Sylvain, 2013 Colombier (CH); GUILLOT, Laurent, 25300 Pontarlier (FR); DOMANGE, Séverine, 74350 Cercier (FR)
(74) Mandataire: Micheli & Cie SA

(56) Documents cités:
- EP-A1- 0 732 635
- CH-A2- 707 884
- FR-A1- 2 952 314

## Description

La présente invention concerne un procédé d'assemblage de composants horlogers.

Dans le domaine horloger, on utilise de plus en plus des matériaux non métalliques tels que le silicium, le diamant, des céramiques, des verres ou des verres métalliques. Grâce à leurs propriétés avantageuses en termes notamment de densité, de coefficient de frottement et d'insensibilité aux champs magnétiques, ces matériaux ont largement contribué à améliorer la précision et le rendement des mécanismes horlogers. Cependant ces matériaux se prêtent mal à certaines techniques d'assemblage. Ne pouvant pas être chassés en raison de leur fragilité, ils sont généralement collés ou montés élastiquement. Le collage entraîne des problèmes de pollution dans le mécanisme et de mauvaise tenue à long terme. Le montage élastique, quant à lui, n'autorise pas la transmission de couples élevés entre les deux composants assemblés.

On connaît par le brevet EP 0732635 un procédé de réalisation de composants horlogers tels qu'une ancre, une roue, un pignon, un spiral ou un balancier, selon lequel le composant est gravé dans une plaque de silicium puis ses parties actives sont le cas échéant recouvertes d'un matériau de dureté et de coefficient de frottement prédéterminés. Pour permettre la fixation du composant à un axe métallique par brasage, soudage ou collage, la paroi et les bords inférieur et supérieur d'un orifice du composant destiné à recevoir l'axe métallique sont revêtus d'un dépôt métallique.

La présente invention concerne plus particulièrement un procédé de brasage de deux composants horlogers. Par « composant horloger » on entend un composant dans son entier, par exemple un spiral ou un piton ; on entend aussi une partie d'un composant horloger, par exemple un crochet qui est sur un arbre de barillet, ou une tirette qui est sur une tige de remontoir. Par « brasage » on entend une opération d'assemblage à l'aide d'un métal d'apport (« brasure ») ayant une température de fusion inférieure à celle des pièces à réunir, le métal d'apport mouillant les surfaces des pièces (zone de brasage) à réunir.

Le caractère mouillant des métaux d'apport varie en fonction des matériaux sur lesquels ils sont déposés. Certains matériaux ont une mauvaise mouillabilité vis-à-vis des métaux d'apport disponibles dans le commerce. Pour le brasage d'une pièce non métallique, il convient donc de choisir un dépôt métallique qui présente à la fois une bonne adhérence sur le matériau de base et une bonne mouillabilité par le métal d'apport, ce que le procédé décrit dans le brevet EP 0732635 ne permet pas. De plus, dans le procédé selon le brevet EP 0732635, le dépôt métallique peut s'oxyder et perdre de sa mouillabilité. De manière générale, le procédé selon le brevet EP 0732635 ne permet pas une optimisation de la tenue de l'assemblage entre le composant horloger et son axe métallique.

La présente invention vise à proposer un procédé amélioré d'assemblage d'un premier composant horloger fait en un matériau de base, typiquement non métallique, et d'un deuxième composant horloger. Le procédé selon l'invention est caractérisé en ce qu'il comprend les étapes suivantes :
a) déposer un revêtement métallique multicouche sur au moins une partie du premier composant horloger, le revêtement métallique multicouche comprenant une première couche en contact avec le premier composant horloger et faite en un premier matériau métallique et, sur la première couche, une deuxième couche faite en un deuxième matériau métallique différent du premier matériau métallique, et
b) braser le deuxième composant horloger à ladite au moins une partie du premier composant horloger.

Entre la première couche et la deuxième couche le revêtement métallique multicouche peut comprendre une ou plusieurs couches intermédiaires.

Selon un premier mode de réalisation de l'invention, l'étape b) comprend les étapes suivantes :
- déposer un métal d'apport sur le revêtement métallique multicouche ;
- faire fondre le métal d'apport pour qu'il lie les premier et deuxième composants horlogers.

Le premier matériau métallique peut être choisi pour avoir sur le matériau de base une meilleure adhérence que le deuxième matériau métallique et le deuxième matériau métallique peut être choisi pour avoir une meilleure mouillabilité par le métal d'apport que le premier matériau métallique.

Le revêtement métallique multicouche peut comprendre en outre, sur la deuxième couche, une troisième couche faite en un troisième matériau métallique différent du deuxième matériau métallique et choisi pour se mélanger au métal d'apport pendant l'étape b), cette troisième couche protégeant la deuxième couche de l'oxydation et préservant ainsi la mouillabilité de la deuxième couche jusqu'à la mise en oeuvre de l'étape b).

En alternative à sa fonction d'augmenter la mouillabilité du revêtement métallique multicouche, ou en plus de cette fonction, la deuxième couche peut servir de barrière de diffusion empêchant pendant l'étape b) la migration d'atomes du premier matériau métallique vers, le cas échéant, la troisième couche et vers le métal d'apport.

Dans une variante du premier mode de réalisation de l'invention, le deuxième matériau métallique est choisi pour se mélanger au métal d'apport pendant l'étape b) et donc constituer une couche sacrificielle protectrice pour la première couche jusqu'à la mise en oeuvre de l'étape b).

Selon un deuxième mode de réalisation de l'invention, l'étape b) comprend une étape consistant à faire fondre la deuxième couche du revêtement métallique multicouche pour constituer un métal d'apport (brasure) liant les premier et deuxième composants horlogers, aucun autre métal d'apport n'étant utilisé pour le brasage.

L'invention propose aussi un mécanisme horloger comprenant un assemblage d'un premier composant horloger et d'un deuxième composant horloger obtenu par le procédé tel que défini ci-dessus.

D'autres caractéristiques et avantages de la présente invention apparaîtront à la lecture de la description détaillée suivante faite en référence aux dessins annexés dans lesquels :
- la figure 1 est une vue en perspective d'un exemple de premier composant horloger selon l'invention, comprenant un spiral, une virole et un organe de fixation à un piton ;
- la figure 2 (figures 2(a) à 2(d)) est une vue en coupe transversale, suivant la ligne A-A de la figure 1, de l'organe de fixation au piton, montrant différentes étapes du procédé selon l'invention pour assembler le premier composant horloger au piton ;
- la figure 3 est une vue en perspective de l'organe de fixation au piton portant un revêtement métallique multicouche ;
- la figure 4 est une vue en coupe transversale, suivant la ligne A-A de la figure 1, de l'organe de fixation au piton, montrant les différentes couches du revêtement métallique multicouche.

Dans le cadre de la présente invention, on entend par le terme « métal » un métal proprement dit ou un alliage à base de métal.

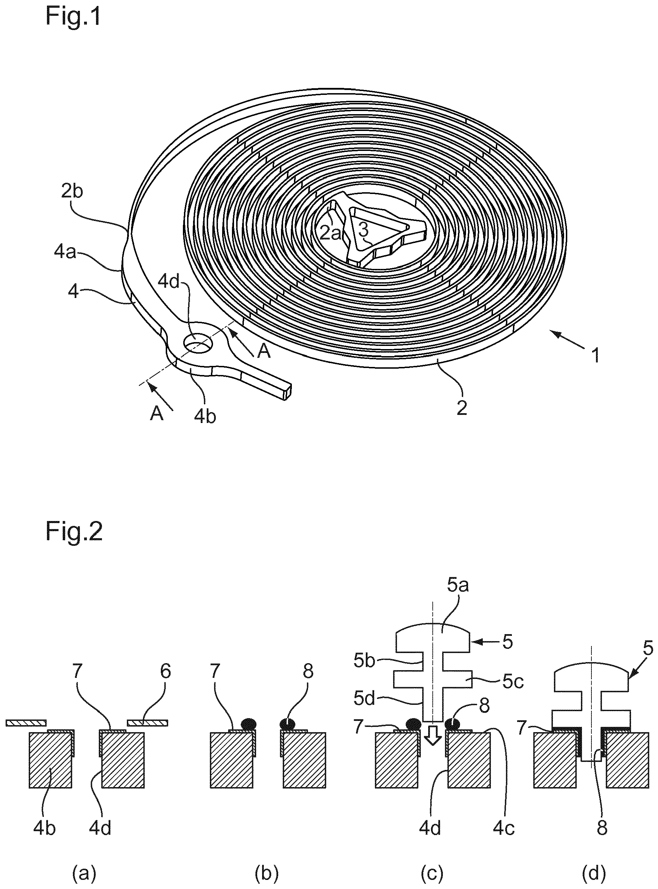

La figure 1 montre un composant horloger 1 selon un exemple de réalisation de l'invention. Dans cet exemple le composant horloger 1 comprend un spiral 2 destiné à équiper un balancier pour former avec ce dernier l'organe régulateur d'un mouvement horloger. Le spiral 2 est constitué d'une lame élastique enroulée en spirale entre une extrémité intérieure 2a et une extrémité extérieure 2b. Par son extrémité intérieure 2a le spiral 2 est joint à une virole 3 destinée à être montée sur l'axe du balancier. Par son extrémité extérieure 2b le spiral 2 est joint à un organe de fixation 4 destiné à être fixé à un piton 5 (visible à la figure 2) monté sur une partie fixe du mouvement horloger, à savoir le coq. Typiquement le composant 1, comprenant le spiral 2, la virole 3 et l'organe de fixation 4, est en une seule pièce obtenue par une technique de micro-fabrication telle que la gravure ionique réactive profonde DRIE. Le composant 1 est en un matériau non métallique, plus particulièrement en un matériau fragile (matériau ne possédant pas de domaine plastique), par exemple en silicium (monocristallin ou polycristallin, dopé ou non) ou autre matériau semi-conducteur, en diamant, en céramique, en verre ou en verre métallique. Le matériau du composant 1 peut aussi être composite et comprendre une âme couverte par un revêtement. Un exemple typique de matériau composite est une âme en silicium couverte par un revêtement en oxyde de silicium, comme décrit dans le brevet EP 1422436.

La présente invention porte notamment sur un procédé permettant d'assembler le composant 1 et le piton 5, c'est-à-dire de fixer l'organe de fixation 4 au piton 5. Comme on peut le voir, l'organe de fixation 4 comprend une lame rigide 4a qui prolonge la lame du spiral 2 et qui est interrompue (comme représenté) ou terminée par un anneau 4b. Le piton 5 comprend successivement une tête 5a, une première partie cylindrique 5b, un épaulement 5c et une deuxième partie cylindrique 5d. La tête 5a et la première partie cylindrique 5b sont destinées respectivement à reposer sur et à traverser le coq de manière connue en soi. L'épaulement 5c est destiné à reposer sur la surface supérieure 4c (tournée vers le coq) de l'anneau 4b. La deuxième partie cylindrique 5d est destinée à s'engager dans le trou 4d de l'anneau 4b. Le piton 5 est métallique.

Un premier mode de réalisation du procédé selon l'invention est maintenant décrit en relation avec la figure 2. Il comprend les étapes suivantes :
a) se doter d'un pochoir 6 (« shadow mask » en anglais) dont le motif correspond à la zone du composant 1 que l'on souhaite métalliser, c'est-à-dire la zone du trou 4d de l'anneau 4b ;
b) définir des points repères sur le composant 1 ;
c) positionner le pochoir 6 sur le composant 1 en suivant les points repère ;
d) fixer le pochoir 6 au composant 1 ;
e) déposer un revêtement métallique multicouche 7 (qui sera décrit plus loin) sur l'ensemble pochoir 6 - composant 1, afin que le revêtement 7 soit présent sur le composant 1 uniquement dans la zone du trou 4d, plus particulièrement sur la paroi et le bord supérieur du trou 4d ;
f) retirer le pochoir 6 du composant 1 ;
g) déposer un métal d'apport 8 sur le revêtement métallique multicouche 7 ;
h) positionner le piton 5 de telle sorte que la deuxième partie cylindrique 5d soit engagée dans le trou 4d et que l'épaulement 5c soit en appui sur la surface supérieure 4c de l'organe de fixation 4 (plus exactement sur le revêtement métallique multicouche 7), et appliquer une pression prédéfinie ;
i) chauffer à une température prédéfinie l'ensemble composant 1 - piton 5 pour faire fondre le métal d'apport 8 et lier le composant 1 et le piton 5 ; selon la température choisie le brasage sera tendre (basse température) ou dur (haute température).

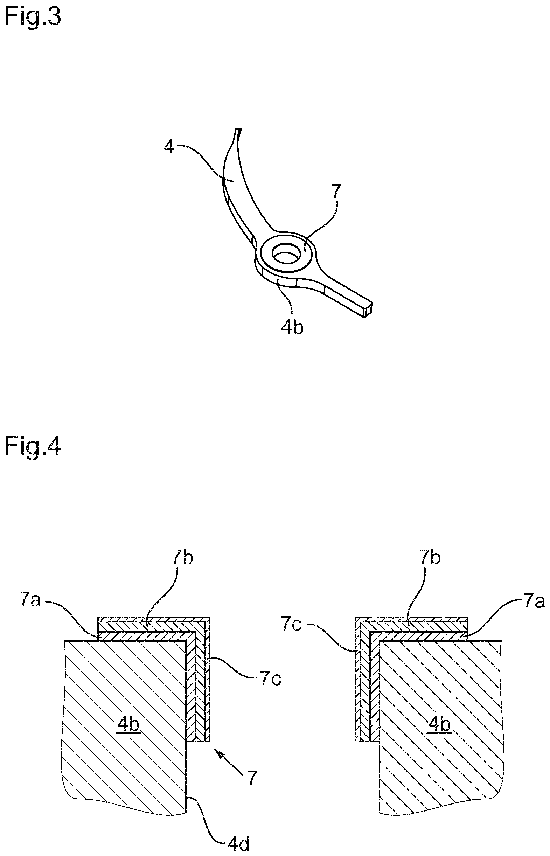

Les étapes a) à e) sont illustrées à la figure 2(a), les étapes f) et g) à la figure 2(b) et les étapes h) et i) aux figures 2(c) et 2(d). La figure 3 montre l'organe de fixation 4 avec son revêtement métallique multicouche 7.

A l'étape g) le métal d'apport 8 peut être déposé soit manuellement soit par un doseur. Avant le chauffage (étape i)) le métal d'apport 8 est sous la forme d'une poudre métallique ou de billes métalliques suspendue(s) dans un liquide visqueux appelé « flux », l'ensemble formant une pâte ou crème à braser, donc une substance non solide. Lors du chauffage le liquide s'évapore et la poudre métallique fond pour créer une interface métallique entre le composant 1 et le piton 5. Des exemples de matériaux pouvant constituer le métal d'apport 8 sont :
- pour un brasage tendre (température inférieure à 450°C) : alliage à base d'étain, d'indium, de plomb, de bismuth ou d'antimoine comme les alliages étain/bismuth, or/étain, argent/étain, indium/étain, plomb/étain ;
- pour un brasage dur (température supérieure à 450°C) : alliage à base de cuivre, de nickel, d'argent, d'aluminium ou de zinc, par exemple alliage cuivre/argent ou cuivre/argent/nickel.

Avec le procédé selon l'invention, le brasage du piton 5 sur le composant 1 est précis et reproductible. Au contraire du matériau non métallique formant le composant 1, le revêtement métallique multicouche 7 présente une mouillabilité élevée et délimite ainsi une zone de brasage dans laquelle la pâte ou crème à braser peut s'étaler avant le chauffage et, surtout, dans laquelle le métal d'apport 8 fondu peut s'étaler pendant le chauffage. De ce fait, la migration du métal d'apport 8 est contenue, ce dernier ne recouvrant que le revêtement métallique multicouche 7. On évite donc une propagation du métal d'apport 8 sur toute la surface du composant 1, propagation qui modifierait les propriétés intrinsèques du matériau et l'esthétique du composant 1. De plus, la quantité de métal d'apport 8 déposée est contrôlée.

Dans une variante du premier mode de réalisation de l'invention, les étapes f) et g) sont interverties.

Le pochoir 6 est par exemple en métal, silicium, céramique ou plastique. Selon le matériau choisi, le pochoir 6 peut être obtenu par usinage mécanique ou chimique, découpage au laser, gravure physique ou chimique ou étampage d'une plaque, par exemple. Une méthode de type sérigraphie ou photolithographie peut aussi être envisagée pour définir la ou les ouvertures du pochoir.

Par définition le revêtement métallique multicouche 7 est solide, c'est-à-dire que toutes ses couches sont à l'état solide. Il peut être déposé sous forme de couches minces par PVD (dépôt physique en phase vapeur), y compris évaporation sous vide ou pulvérisation cathodique, ou par CVD (dépôt chimique en phase vapeur), y compris ALD (dépôt de couches atomiques) et MVD (dépôt moléculaire en phase vapeur). Il peut aussi être déposé sous forme de couches épaisses par projection, croissance galvanique ou autre.

En pratique, plusieurs composants sont réalisés à partir d'une même plaque de matériau non métallique. Le dépôt du revêtement métallique multicouche 7 peut être réalisé sur chaque composant après que ce dernier a été séparé de la plaque de matériau non métallique, ou simultanément sur tous les composants alors qu'ils sont encore attachés à la plaque. Dans ce dernier cas un unique pochoir recouvrant tous les composants de la plaque et positionné par rapport à des points repères sur la plaque peut être employé.

Le pochoir 6 permet de déposer le revêtement métallique multicouche 7 de manière localisée sur le composant 1. Dans la présente invention l'usage d'un pochoir est préféré à la mise en oeuvre d'un procédé de photolithographie en raison de sa simplicité et de son faible coût. La présente invention n'exclut toutefois pas la mise en oeuvre d'un procédé de photolithographie, avec masque en résine formé sur le composant 1. La présente invention n'exclut pas non plus de déposer le revêtement métallique multicouche 7 de manière non localisée. Par exemple, on pourrait recouvrir tout le composant 1 du revêtement métallique multicouche 7 puis enlever, par exemple par laser, ledit revêtement 7 sauf dans la zone du brasage. On pourrait aussi laisser le revêtement métallique multicouche 7 sur tout le composant 1, avec cependant pour conséquence les inconvénients mentionnés plus haut liés à la propagation du métal d'apport 8.

Comme montré à la figure 4, le revêtement métallique multicouche 7 comprend une première couche métallique 7a déposée sur le composant 1 et une deuxième couche métallique 7b déposée sur la première couche métallique 7a. La première couche métallique 7a est en un matériau qui adhère bien (mieux que le matériau de la deuxième couche métallique 7b) sur le matériau non métallique du composant 1. La deuxième couche métallique 7b est en un matériau ayant une bonne mouillabilité (meilleure mouillabilité que la première couche métallique 7a et que le composant 1) par le métal d'apport 8.

Ces propriétés d'adhérence et de mouillabilité peuvent être mesurées par des tests classiques tels que, pour l'adhérence, une mesure par nanoindentation sur coupe (ou interfaciale), une mesure par nanorayure ou une mesure par micro scratch test, et pour la mouillabilité, une mesure de l'angle de contact entre la surface d'une goutte et la surface de l'échantillon ou une méthode de goutte pendante ou de pesée de goutte avec un tensiomètre.

Ainsi, le revêtement métallique multicouche 7 selon l'invention associe ces propriétés d'adhérence et de mouillabilité pour une tenue améliorée de l'organe de fixation 4 sur le piton 5. La première couche métallique 7a permet à la deuxième couche métallique 7b, mouillable par le métal d'apport 8, d'adhérer fermement au composant 1. Ces deux couches 7a, 7b restent à l'état solide pendant le chauffage (étape i)).

La première couche métallique 7a est par exemple en chrome, titane ou tantale, ou en un alliage à base d'un ou plusieurs de ces métaux. La deuxième couche métallique 7b est par exemple en cuivre, platine, palladium, argent, or, nickel, molybdène, rhodium, tungstène, étain, fer, cobalt, ou iridium, ou en un alliage à base d'un ou plusieurs de ces métaux, par exemple un alliage or/étain ou argent/étain.

Le revêtement métallique multicouche 7 peut comprendre en outre une troisième couche métallique 7c, typiquement très mince, déposée sur la deuxième couche métallique 7b pour protéger la deuxième couche métallique 7b de l'oxydation. En effet, l'oxydation d'une surface dégrade généralement la mouillabilité. La troisième couche métallique 7c est sacrificielle, elle se mélange au métal d'apport 8 pendant le chauffage (étape i)). Elle a de préférence une mouillabilité par le métal d'apport 8 supérieure à celle de la première couche métallique 7a et de préférence encore supérieure à celle de la deuxième couche métallique 7b. Cette troisième couche métallique 7c peut être en or, nickel, platine, iridium, osmium, palladium, rhodium, ruthénium ou molybdène, ou en un alliage à base d'un ou plusieurs de ces métaux. Elle est particulièrement utile dans le cas d'une deuxième couche métallique 7b en cuivre ou en nickel.

Pour que la troisième couche métallique 7c soit sacrificielle, on choisit comme métal d'apport 8 un métal qui réagit de manière physico-chimique avec le matériau de la troisième couche métallique 7c. Un tel métal, par exemple un alliage à base d'étain, formera un alliage avec le matériau de la troisième couche métallique 7c entraînant ainsi la disparition de cette dernière.

Une ou plusieurs couches intermédiaires peuvent également être prévues entre la première couche métallique 7a et la deuxième couche métallique 7b.

En alternative à sa fonction d'augmenter la mouillabilité du revêtement métallique multicouche 7, ou en plus de cette fonction, la deuxième couche métallique 7b peut servir de barrière de diffusion empêchant les atomes de la première couche métallique 7a (particulièrement les atomes de chrome ou de titane) de migrer vers la troisième couche métallique 7c, lorsqu'elle est présente, et vers le métal d'apport 8 pendant le chauffage (étape i)). Une telle migration peut en effet diminuer l'adhérence de la première couche métallique 7a sur le composant 1 ou fragiliser la brasure. Parmi les matériaux pouvant faire office de barrière de diffusion et constituer ainsi une telle deuxième couche métallique 7b, on peut citer : nickel, tantale, platine, palladium, vanadium, iridium, tungstène, cobalt, hafnium, zirconium, ruthénium ou niobium, ou alliage à base d'un ou plusieurs de ces métaux.

Dans une variante du premier mode de réalisation de l'invention, le revêtement métallique multicouche 7 ne comporte pas de troisième couche métallique 7c et la deuxième couche métallique 7b est sacrificielle, en d'autres termes elle est très mince et son matériau est choisi pour se mélanger au métal d'apport 8 pendant le chauffage (étape i)). Cette deuxième couche métallique 7b remplit alors la fonction de protéger la première couche métallique 7a de l'oxydation. La mouillabilité de la deuxième couche métallique 7b par le métal d'apport 8 est de préférence supérieure à celle de la première couche métallique 7a. Des exemples de matériaux pour la deuxième couche métallique 7b dans cette variante sont les suivants : or, nickel, platine, iridium, osmium, palladium, rhodium, ruthénium ou molybdène, ou un alliage à base d'un ou plusieurs de ces métaux.

Selon un deuxième mode de réalisation, le procédé selon l'invention comprend les étapes a) à i) décrites précédemment à l'exception de l'étape g) consistant à déposer le métal d'apport 8. Dans ce deuxième mode de réalisation le métal d'apport (brasure) fait partie du revêtement métallique multicouche 7. En plus de la première couche métallique ou couche d'accrochage 7a, le revêtement métallique multicouche 7 comprend en effet la deuxième couche métallique 7b (non revêtue de la troisième couche 7c) dont le matériau est choisi pour fondre pendant le chauffage et constituer le métal d'apport pour le brasage. Le matériau de la deuxième couche métallique 7b est par exemple un alliage or/étain. Ce mode de réalisation présente l'avantage d'un travail à sec, aucune pâte ou crème à braser, donc aucun flux ou autre liquide visqueux, n'étant utilisé. De plus la quantité de métal d'apport est parfaitement contrôlée puisqu'elle est déterminée par l'épaisseur de la deuxième couche métallique 7b déposée par PVD ou CVD, projection ou croissance galvanique. En outre, ce mode de réalisation permet un auto-centrage du piton 5 dans le trou 4d grâce à l'épaisseur contrôlée de la deuxième couche métallique 7b et au très faible jeu pouvant exister entre la paroi du trou 4d et le piton 5 avant le brasage.

Dans une variante du deuxième mode de réalisation, une couche intermédiaire est déposée entre la première couche métallique 7a et la deuxième couche métallique 7b pour servir de barrière de diffusion.

Dans la présente invention l'épaisseur de chaque couche du revêtement métallique multicouche 7 est typiquement inférieure à 10 µm, de préférence inférieure à 5 µm voire, pour la première couche 7a, inférieure à 1 µm. L'éventuelle couche sacrificielle, 7b ou 7c selon la variante utilisée, peut avoir une épaisseur inférieure à 50 nm.

La présente invention n'est pas limitée à la fixation d'un spiral au piton. Elle peut en effet s'appliquer aussi, par exemple, à la fixation d'un spiral à l'axe de balancier, à la fixation d'une roue, d'un pignon, d'une ancre d'échappement, d'un balancier, d'une bascule ou d'un levier à son axe de rotation, à la fixation de masselottes métalliques sur un balancier pour en augmenter l'inertie ou plus généralement à l'assemblage de deux composants horlogers.

La présente invention n'est pas non plus limitée à l'assemblage d'un composant horloger non métallique et d'un composant horloger métallique. Les deux composants peuvent en effet être non métalliques. Dans ce cas, avant le brasage, on pourra déposer le revêtement métallique multicouche selon l'invention sur les deux composants, ou déposer le revêtement métallique multicouche selon l'invention sur l'un des deux composants et un autre type de revêtement métallique sur l'autre composant. On pourra en particulier utiliser des matériaux métalliques différents pour les deux composants. Par exemple le premier composant peut comprendre une dernière couche en or et le deuxième composant peut comprendre une dernière couche en étain. Les premières couches ou couches d'accrochage peuvent aussi être différentes. Il est opportun de prédéterminer les épaisseurs des couches d'accrochage afin d'améliorer la tenue de l'assemblage.

Enfin, la présente invention peut également s'appliquer à l'assemblage de composants horlogers tous deux métalliques, le revêtement métallique multicouche déposé sur l'un des composants ou sur les deux permettant d'améliorer la tenue de l'assemblage et la qualité du brasage.

## Revendications

1. Procédé d'assemblage d'un premier composant horloger (1) fait en un matériau de base et d'un deuxième composant horloger (5), **caractérisé en ce qu'**il comprend les étapes suivantes :
a) déposer un revêtement métallique multicouche (7) sur au moins une partie du premier composant horloger (1), le revêtement métallique multicouche (7) comprenant une première couche (7a) en contact avec le premier composant horloger (1) et faite en un premier matériau métallique et, sur la première couche (7a), une deuxième couche (7b) faite en un deuxième matériau métallique différent du premier matériau métallique, et
b) braser le deuxième composant horloger (5) à ladite au moins une partie du premier composant horloger (1).

2. Procédé selon la revendication 1, **caractérisé en ce que** le matériau de base est un matériau non métallique.

3. Procédé selon la revendication 1 ou 2, **caractérisé en ce que** le matériau de base est un matériau fragile.

4. Procédé selon l'une quelconque des revendications 1 à 3, **caractérisé en ce que** le matériau de base comprend au moins l'un des matériaux suivants : silicium ou autre matériau semi-conducteur, verre, céramique, diamant, verre métallique.

5. Procédé selon l'une quelconque des revendications 1 à 4, **caractérisé en ce que** le matériau de base comprend une âme en silicium couverte d'oxyde de silicium.

6. Procédé selon l'une quelconque des revendications 1 à 5, **caractérisé en ce que** le premier matériau métallique comprend au moins l'un des matériaux suivants : chrome, titane, tantale.

7. Procédé selon l'une quelconque des revendications 1 à 6, **caractérisé en ce que** le deuxième matériau métallique comprend au moins l'un des matériaux suivants : cuivre, platine, palladium, argent, or, nickel, molybdène, rhodium, tungstène, étain, fer, cobalt, iridium, tantale, vanadium, hafnium, zirconium, ruthénium, niobium, osmium.

8. Procédé selon l'une quelconque des revendications 1 à 7, **caractérisé en ce que** le premier matériau métallique est choisi pour avoir sur le matériau de base une meilleure adhérence que le deuxième matériau métallique.

9. Procédé selon l'une quelconque des revendications 1 à 8, **caractérisé en ce que** l'étape b) comprend les étapes suivantes :
- déposer un métal d'apport (8) sur le revêtement métallique multicouche (7) ; et
- faire fondre le métal d'apport (8) pour qu'il lie les premier et deuxième composants horlogers (1, 5).

10. Procédé selon la revendication 9, **caractérisé en ce que** le deuxième matériau métallique est choisi pour avoir une meilleure mouillabilité par le métal d'apport (8) que le premier matériau métallique.

11. Procédé selon la revendication 9 ou 10, **caractérisé en ce que** le revêtement métallique multicouche (7) comprend en outre, sur la deuxième couche (7b), une troisième couche (7c) faite en un troisième matériau métallique différent du deuxième matériau métallique et choisi pour se mélanger au métal d'apport (8) pendant l'étape b).

12. Procédé selon la revendication 11, **caractérisé en ce que** le troisième matériau métallique comprend au moins l'un des matériaux suivants : or, nickel, platine, iridium, osmium, palladium, rhodium, ruthénium, molybdène.

13. Procédé selon l'une quelconque des revendications 9 à 12, **caractérisé en ce que** la deuxième couche (7b) sert de barrière de diffusion empêchant la migration d'atomes du premier matériau métallique pendant l'étape b).

14. Procédé selon la revendication 9 ou 10, **caractérisé en ce que** le deuxième matériau métallique est choisi pour se mélanger au métal d'apport (8) pendant l'étape b).

15. Procédé selon l'une quelconque des revendications 9 à 14, **caractérisé en ce que** le métal d'apport (8) comprend au moins un alliage à base d'étain, d'indium, de cuivre, de nickel, d'argent, d'aluminium, de plomb, de bismuth, d'antimoine ou de zinc.

16. Procédé selon l'une quelconque des revendications 1 à 8, **caractérisé en ce que** l'étape b) comprend une étape consistant à faire fondre la deuxième couche (7b) pour constituer un métal d'apport liant les premier et deuxième composants horlogers (1, 5).

17. Procédé selon l'une quelconque des revendications 1 à 16, **caractérisé en ce qu'**à l'étape a) le revêtement métallique multicouche (7) est déposé par au moins l'une des techniques suivantes : dépôt physique en phase vapeur, dépôt chimique en phase vapeur, projection, croissance galvanique.

18. Procédé selon l'une quelconque des revendications 1 à 17, **caractérisé en ce qu'**à l'étape a) le revêtement métallique multicouche (7) est déposé sur le premier composant horloger (1) uniquement dans une zone où le brasage est effectué à l'étape b).

19. Procédé selon l'une quelconque des revendications 1 à 18, **caractérisé en ce que** le deuxième composant horloger (5) est métallique.

20. Procédé selon l'une quelconque des revendications 1 à 18, **caractérisé en ce que** le deuxième composant horloger (5) est non métallique.

21. Procédé selon la revendication 20, **caractérisé en ce qu'**il comprend en outre, avant l'étape b), une étape consistant à déposer un revêtement métallique sur le deuxième composant horloger (5) au moins dans une zone où le brasage est effectué à l'étape b).

22. Procédé selon l'une quelconque des revendications 1 à 21, **caractérisé en ce que** le premier composant horloger (1) comprend un trou (4d) et **en ce que** l'étape b) comprend le fait de braser le deuxième composant horloger (5) dans ce trou (4d).

23. Procédé selon l'une quelconque des revendications 1 à 22, **caractérisé en ce que** le premier composant horloger (1) comprend au moins l'un des composants suivants : spiral (2) ou autre ressort, roue, pignon, ancre d'échappement, balancier, bascule, levier.

24. Procédé selon l'une quelconque des revendications 1 à 23, **caractérisé en ce que** le premier composant horloger (1) comprend un spiral (2) et un organe de fixation (4) joint à l'extrémité extérieure (2b) du spiral (2), **en ce que** le deuxième composant horloger (5) comprend un piton et **en ce que** le revêtement métallique multicouche (7) est déposé au moins sur l'organe de fixation (4).

## Patentansprüche

1. Verfahren für den Zusammenbau eines ersten Uhrenbauteils (1), das aus einem Basismaterial hergestellt ist, und eines zweiten Uhrenbauteils (5), **dadurch gekennzeichnet, dass** es die folgenden Schritte umfasst:
a) Aufbringen eines mehrschichtigen Metallüberzugs (7) auf mindestens einem Teil des ersten Uhrenbauteils (1), wobei der mehrschichtige Metallüberzug (7) eine erste Schicht (7a), die mit dem ersten Uhrenbauteil (1) in Kontakt ist und aus einem ersten Metallmaterial hergestellt ist, und auf der ersten Schicht (7a) eine zweite Schicht (7b) umfasst, die aus einem zweiten Metallmaterial hergestellt ist, das sich von dem ersten Metallmaterial unterscheidet, und
b) Löten des zweiten Uhrenbauteils (5) an das mindestens eine Teil des ersten Uhrenbauteils (1).

2. Verfahren nach Anspruch 1, **dadurch gekennzeichnet, dass** das Basismaterial ein nichtmetallisches Material ist.

3. Verfahren nach Anspruch 1 oder 2, **dadurch gekennzeichnet, dass** das Basismaterial ein zerbrechliches Material ist.

4. Verfahren nach einem der Ansprüche 1 bis 3, **dadurch gekennzeichnet, dass** das Basismaterial mindestens eines von den folgenden Materialien umfasst: Silizium oder anderes Halbleitermaterial, Glas, Keramik, Diamant, Metallglas.

5. Verfahren nach einem der Ansprüche 1 bis 4, **dadurch gekennzeichnet, dass** das Basismaterial einen Kern aus Silizium umfasst, der mit Siliziumoxid bedeckt ist.

6. Verfahren nach einem der Ansprüche 1 bis 5, **dadurch gekennzeichnet, dass** das erste Metallmaterial mindestens eines von den folgenden Materialien umfasst: Chrom, Titan, Tantal.

7. Verfahren nach einem der Ansprüche 1 bis 6, **dadurch gekennzeichnet, dass** das zweite Metallmaterial mindestens eines von den folgenden Materialien umfasst: Kupfer, Platin, Palladium, Silber, Gold, Nickel, Molybdän, Rhodium, Wolfram, Zinn, Eisen, Kobalt, Iridium, Tantal, Vanadium, Hafnium, Zirkon, Ruthenium, Niob, Osmium.

8. Verfahren nach einem der Ansprüche 1 bis 7, **dadurch gekennzeichnet, dass** das erste Metallmaterial gewählt wird, um gegenüber dem Basismaterial eine bessere Haftung aufzuweisen als das zweite Metallmaterial.

9. Verfahren nach einem der Ansprüche 1 bis 8, **dadurch gekennzeichnet, dass** der Schritt b) die folgenden Schritte umfasst:
- Aufbringen eines Zusatzmetalls (8) auf dem mehrschichtigen Metallüberzug (7); und
- Schmelzen des Zusatzmetalls (8), damit es das erste und das zweite Uhrenbauteil (1, 5) verbindet.

10. Verfahren nach Anspruch 9, **dadurch gekennzeichnet, dass** das zweite Metallmaterial gewählt wird, um eine bessere Benetzbarkeit durch das Zusatzmetall (8) aufzuweisen als das erste Metallmaterial.

11. Verfahren nach Anspruch 9 oder 10, **dadurch gekennzeichnet, dass** der mehrschichtige Metallüberzug (7) ferner auf der zweiten Schicht (7b) eine dritte Schicht (7c) umfasst, die aus einem dritten Metallmaterial hergestellt ist, das sich von dem zweiten Metallmaterial unterscheidet und gewählt wird, um sich während des Schrittes b) mit dem Zusatzmetall (8) zu mischen.

12. Verfahren nach Anspruch 11, **dadurch gekennzeichnet, dass** das dritte Metallmaterial mindestens eines von den folgenden Materialien umfasst: Gold, Nickel, Platin, Iridium, Osmium, Palladium, Rhodium, Ruthenium, Molybdän.

13. Verfahren nach einem der Ansprüche 9 bis 12, **dadurch gekennzeichnet, dass** die zweite Schicht (7b) als Diffusionsbarriere dient, die die Migration von Atomen des ersten Metallmaterials während des Schrittes b) verhindert.

14. Verfahren nach Anspruch 9 oder 10, **dadurch gekennzeichnet, dass** das zweite Metallmaterial gewählt wird, um sich während des Schrittes b) mit dem Zusatzmetall (8) zu mischen.

15. Verfahren nach einem der Ansprüche 9 bis 14, **dadurch gekennzeichnet, dass** das Zusatzmetall (8) mindestens eine Legierung auf Basis von Zinn, Indium, Kupfer, Nickel, Silber, Aluminium, Blei, Wismut, Antimon oder Zink umfasst.

16. Verfahren nach einem der Ansprüche 1 bis 8, **dadurch gekennzeichnet, dass** der Schritt b) einen Schritt umfasst, der darin besteht, die zweite Schicht (7b) zum Schmelzen zu bringen, um ein Zusatzmetall zu bilden, das das erste und das zweite Uhrenbauteil (1, 5) verbindet.

17. Verfahren nach einem der Ansprüche 1 bis 16, **dadurch gekennzeichnet, dass** im Schritt a) der mehrschichtige Metallüberzug (7) durch mindestens eine der folgenden Techniken aufgebracht wird: physikalische Gasphasenabscheidung, chemische Gasphasenabscheidung, Aufspritzen, galvanisches Wachstum.

18. Verfahren nach einem der Ansprüche 1 bis 17, **dadurch gekennzeichnet, dass** im Schritt a) der mehrschichtige Metallüberzug (7) auf dem ersten Uhrenbauteil (1) einzig in einer Zone aufgebracht wird, wo im Schritt b) das Löten durchgeführt wird.

19. Verfahren nach einem der Ansprüche 1 bis 18, **dadurch gekennzeichnet, dass** das zweite Uhrenbauteil (5) metallisch ist.

20. Verfahren nach einem der Ansprüche 1 bis 18, **dadurch gekennzeichnet, dass** das zweite Uhrenbauteil (5) nicht metallisch ist.

21. Verfahren nach Anspruch 20, **dadurch gekennzeichnet, dass** es ferner vor dem Schritt b) einen Schritt umfasst, der darin besteht, einen Metallüberzug auf dem zweiten Uhrenbauteil (5) mindestens in einer Zone aufzubringen, wo im Schritt b) das Löten durchgeführt wird.

22. Verfahren nach einem der Ansprüche 1 bis 21, **dadurch gekennzeichnet, dass** das erste Uhrenbauteil (1) ein Loch (4d) umfasst, und dadurch, dass der Schritt b) die Tatsache des Lötens des zweiten Uhrenbauteils (5) in diesem Loch (4d) umfasst.

23. Verfahren nach einem der Ansprüche 1 bis 22, **dadurch gekennzeichnet, dass** das erste Uhrenbauteil (1) mindestes eines der folgenden Bauteile umfasst: Spiralfeder (2) oder andere Feder, Rad, Trieb, Hemmungsanker, Unruh, Wippe, Hebel.

24. Verfahren nach einem der Ansprüche 1 bis 23, **dadurch gekennzeichnet, dass** das erste Uhrenbauteil (1) eine Spiralfeder (2) und ein Befestigungsorgan (4) umfasst, das an dem äußeren Ende (2b) der Spiralfeder (2) verbunden ist, dadurch, dass das zweite Uhrenbauteil (5) ein Spiralklötzchen umfasst, und dadurch, dass der mehrschichtige Metallüberzug (7) mindestens auf dem Befestigungsorgan (4) aufgebracht wird.

## Claims

1. Method for joining a first timepiece component (1), made of a base material, and a second timepiece component (5), **characterised in that** it comprises the following steps:
a) depositing a multilayer metallic coating (7) on at least a part of the first timepiece component (1), the multilayer metallic coating (7) comprising a first layer (7a) in contact with the first timepiece component (1) and made of a first metallic material and, on the first layer (7a), a second layer (7b) made of a second metallic material different from the first metallic material, and
b) brazing the second timepiece component (5) to said at least a part of the first timepiece component (1).

2. Method as claimed in claim 1, **characterised in that** the base material is a non-metallic material.

3. Method as claimed in claim 1 or 2, **characterised in that** the base material is a fragile material.

4. Method as claimed in any one of claims 1 to 3, **characterised in that** the base material comprises at least one of the following materials: silicon or other semiconductor material, glass, ceramic, diamond, metallic glass.

5. Method as claimed in any one of claims 1 to 4, **characterised in that** the base material comprises a core of silicon covered with silicon oxide.

6. Method as claimed in any one of claims 1 to 5, **characterised in that** the first metallic material comprises at least one of the following materials: chromium, titanium, tantalum.

7. Method as claimed in any one of claims 1 to 6, **characterised in that** the second metallic material comprises at least one of the following materials: copper, platinum, palladium, silver, gold, nickel, molybdenum, rhodium, tungsten, tin, iron, cobalt, iridium, tantalum, vanadium, hafnium, zirconium, ruthenium, niobium, osmium.

8. Method as claimed in any one of claims 1 to 7, **characterised in that** the first metallic material is selected to have better adherence to the base material than the second metallic material.

9. Method as claimed in any one of claims 1 to 8, **characterised in that** step b) comprises the following steps:
- depositing a brazing filler metal (8) on the multilayer metallic coating (7); and
- melting the brazing filler metal (8) so that it binds the first and second timepiece components (1, 5).

10. Method as claimed in claim 9, **characterised in that** the second metallic material is selected to have better wettability by the brazing filler metal (8) than the first metallic material.

11. Method as claimed in claim 9 or 10, **characterised in that** the multilayer metallic coating (7) further comprises, on the second layer (7b), a third layer (7c) made of a third metallic material different from the second metallic material and selected to mix with the brazing filler metal (8) during step b).

12. Method as claimed in claim 11, **characterised in that** the third metallic material comprises at least one of the following materials: gold, nickel, platinum, iridium, osmium, palladium, rhodium, ruthenium, molybdenum.

13. Method as claimed in any one of claims 9 to 12, **characterised in that** the second layer (7b) acts as a diffusion barrier preventing the migration of atoms from the first metallic material during step b).

14. Method as claimed in claim 9 or 10, **characterised in that** the second metallic material is selected to mix with the brazing filler metal (8) during step b).

15. Method as claimed in any one of claims 9 to 14, **characterised in that** the brazing filler metal (8) comprises at least one alloy based on tin, indium, copper, nickel, silver, aluminium, lead, bismuth, antimony or zinc.

16. Method as claimed in any one of claims 1 to 8, **characterised in that** step b) comprises a step consisting of melting the second layer (7b) to form a brazing filler metal binding the first and second timepiece components (1, 5).

17. Method as claimed in any one of claims 1 to 16, **characterised in that** in step a) the multilayer metallic coating (7) is deposited by least one of the following techniques: physical vapour deposition, chemical vapour deposition, projection, galvanic growth.

18. Method as claimed in any one of claims 1 to 17, **characterised in that** in step a) the multilayer metallic coating (7) is deposited on the first timepiece component (1) only in an area in which brazing is effected in step b).

19. Method as claimed in any one of claims 1 to 18, **characterised in that** the second timepiece component (5) is metallic.

20. Method as claimed in any one of claims 1 to 18, **characterised in that** the second timepiece component (5) is non-metallic.

21. Method as claimed in claim 20, **characterised in that** it further comprises, prior to step b), a step consisting of depositing a metallic coating on the second timepiece component (5) at least in an area where brazing is effected in step b).

22. Method as claimed in any one of claims 1 to 21, **characterised in that** the first timepiece component (1) comprises a hole (4d), and **in that** step b) comprises brazing the second timepiece component (5) in this hole (4d).

23. Method as claimed in any one of claims 1 to 22, **characterised in that** the first timepiece component (1) comprises at least one of the following components: balance-spring (2) or other spring, wheel, pinion, escapement anchor, balance, rocker, lever.

24. Method as claimed in any one of claims 1 to 23, **characterised in that** the first timepiece component (1) comprises a balance-spring (2) and a fixing member (4) joined to the outer end (2b) of the balance-spring (2), and **in that** the second timepiece component (5) comprises a balance-spring stud, and **in that** the multilayer metallic coating (7) is deposited at least on the fixing member (4).
